(19) **Europäisches Patentamt**
**European Patent Office**
**Office européen des brevets**

(11) **EP 3 221 473 B1**

(12) **EUROPEAN PATENT SPECIFICATION**

(45) Date of publication and mention
of the grant of the patent:
**08.01.2020 Bulletin 2020/02**

(51) Int Cl.:
**C21D 1/40** *(2006.01)* **C21D 9/46** *(2006.01)*
**C21D 1/673** *(2006.01)* **C21D 1/42** *(2006.01)*
**H05B 3/00** *(2006.01)*

(21) Application number: **15807706.5**

(22) Date of filing: **20.11.2015**

(86) International application number:
**PCT/JP2015/005811**

(87) International publication number:
**WO 2016/079998 (26.05.2016 Gazette 2016/21)**

(54) **HEATING METHOD, HEATING APPARATUS, AND FABRICATION METHOD FOR PRESS-MOLDED ARTICLE**

HEIZVERFAHREN, HEIZVORRICHTUNG UND VERFAHREN ZUR HERSTELLUNG VON PRESSGEFORMTEN ARTIKELN

PROCÉDÉ DE CHAUFFAGE, APPAREIL DE CHAUFFAGE ET PROCÉDÉ DE FABRICATION D'UN ARTICLE MOULÉ PAR COMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.11.2014 JP 2014235365**

(43) Date of publication of application:
**27.09.2017 Bulletin 2017/39**

(73) Proprietor: **Neturen Co., Ltd.**
**Tokyo 141-8639 (JP)**

(72) Inventors:
• **OOYAMA, Hironori**
**Tokyo 141-8639 (JP)**
• **IKUTA, Fumiaki**
**Tokyo 141-8639 (JP)**

(74) Representative: **Zimmermann & Partner Patentanwälte mbB**
**Josephspitalstr. 15**
**80331 München (DE)**

(56) References cited:
**WO-A1-2014/025054     JP-A- H11 339 928**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field

The present invention relates to a heating method and a heating apparatus for performing direct resistance heating on a plate workpiece, and a fabrication method for a press-molded article.

## Background

A heating method is known in which a pair of electrodes is brought into contact with a plate workpiece and then an electric current is provided between the pair of electrodes so that direct resistance heating is performed on the plate workpiece. In this heating method, size reduction of the heating apparatus can be achieved in comparison with so-called furnace heating which is performed in a state that the entire plate workpiece is contained in a furnace. On the other hand, it is also known that non-uniformity is easily caused in the heating temperature depending on the shape of the plate workpiece.

Thus, in many cases, direct resistance heating has been employed in a case that a plate workpiece having a relatively simple shape such as a band shape and a quadrangular shape is to be heated. However, in recent years, it has been proposed that direct resistance heating is to be employed even in a case that a plate workpiece having a relatively complicated shape is to be heated.

For example, JP2011-189402A describes a heating method of performing direct resistance heating on a metal plate obtained by combining a plurality of shapes, in hot pressing of a structural component of an automobile. According to this method, by attaching four or more electrodes to a plate workpiece and by applying electric current to selected two of the electrodes, the plate workpiece having a shape that can be considered as a combination of a plurality of shapes can be heated to a uniform temperature.

Further, JP4563469B2 describes a method of quenching a part of regions of a plate workpiece and then performing press working. In this method, the width of the plate workpiece to be processed by press working is made to vary in the longitudinal direction of the workpiece so that a portion where the electric current density becomes high when electric current is applied between the pair of electrodes is provided. Then, this portion is heated higher than the quenching temperature. In the other portions, the electric current density is low and hence the portions are maintained below the quenching temperature.

WO 2014/025054 A1 describes a direct resistance heating method for differentially heating segments of a workpiece using movable rollers, by adjusting the time during which electric current is applied for each segment.

In a heating apparatus for performing direct resistance heating in a state that a plurality of pairs of electrodes are attached to a plate workpiece like in JP2011-189402A, a large number of pairs of electrodes are necessary for the purpose of uniformly heating the plate workpiece. Thus, the heating apparatus has a complicated structure.

On the other hand, in a case that partial heating is performed by utilizing the shape of the plate workpiece like in JP4563469B2, the structure of the heating apparatus can be simplified. Nevertheless, in order that a broad region of the plate workpiece may be heated uniformly, the shape of the plate workpiece need be made in advance to be a shape in conformity to the heat treatment and hence the productivity is degraded.

When direct resistance heating of a plate workpiece having a relatively complicated shaped is to be performed, a method may be employed that, for the purpose of simplifying the device configuration, an electric current is supplied over the entire length of the workpiece in the longitudinal direction of the workpiece so that direct resistance heating is performed on the workpiece. Nevertheless, depending on the shape of the work, the cross sectional area of the cross section perpendicular to the longitudinal direction of the workpiece varies in the longitudinal direction of the workpiece and hence the distribution of the electric current density becomes excessively non-uniform. As a result, a portion suffering excessive heating or a portion suffering insufficient heating occurs and hence uniform heating of the entirety has been difficult.

## Summary

It is an object of the present invention to provide a plate workpiece heating method and a heating apparatus having a simple configuration capable of easily heating a wide region of a plate workpiece having a relatively complicated shape to a target temperature range, the heating method being applicable to a method for fabricating a press-molded article.

According to an aspect of the present invention, a method for heating a plate workpiece according to claim 1 is provided.

According to another aspect of the present invention, a heating apparatus is configured according to claim 7.

According to another aspect of the present invention, a method for fabricating a press-molded article is provided.

The method includes heating a plate workpiece by the heating method described above; and pressing the plate workpiece by a press die to perform hot pressing.

**Brief Description of Drawings**

[fig. 1A]Fig. 1A is a diagram illustrating a configuration of an example of a plate workpiece to be heated by a heating method according to an embodiment of the present invention.

[fig.1B]Fig. 1B is a diagram illustrating the plate workpiece and a portion of a heating apparatus according to an embodiment of the present invention.

[fig.1C] Fig. 1C is a diagram illustrating the plate workpiece and another portion of the heating apparatus.

[fig.1D]Fig. 1D is a diagram illustrating the plate workpiece and another portion of the heating apparatus.

[fig.2]Fig. 2 is a diagram illustrating a concept of electric current adjustment for heating a plate workpiece to be in a target temperature range by a heating method shown in Figs. 1A to 1D.

[fig.3]Fig. 3 is a diagram illustrating an example of: a relationship between an elapsed time from heating start and a location of a movable electrode, a relationship between the movement of the movable electrode and electric current to be supplied between the pair of electrodes, and a temperature distribution of a plate workpiece at the time of heating completion, according to the heating method of Fig. 1A to 1D.

[fig.4A]Fig. 4A is a diagram illustrating a modified example of the heating method of Fig. 1A to 1D.

[fig.4B]Fig. 4B is another diagram illustrating the modified example of the heating method of Fig. 1A to 1D.

[fig.4C]Fig. 4C is another diagram illustrating the modified example of the heating method of Fig. 1A to 1D.

[fig.4D]Fig. 4D is another diagram illustrating the modified example of the heating method of Fig. 1A to 1D.

[fig.5A]Fig. 5A is a diagram illustrating a configuration of an example of a plate workpiece to be heated by a heating method according to another embodiment of the present invention.

[fig.5B]Fig. 5B is a diagram illustrating the plate workpiece and a portion of a heating apparatus according to another embodiment of the present invention.

[fig.5C]Fig. 5C is a diagram illustrating the plate workpiece and another portion of the heating apparatus.

[fig.5D]Fig. 5D is a diagram illustrating the plate workpiece and another portion of the heating apparatus.

[fig.6]Fig. 6 is a diagram illustrating an example of a method for fabricating a press-molded article according to another embodiment of the present invention.

[fig.7]Fig. 7 is a diagram illustrating another example of a method for fabricating a press-molded article according to another embodiment of the present invention.

**Description of Embodiments**

Hereinafter, embodiments of the present invention will be described with reference to the drawings.

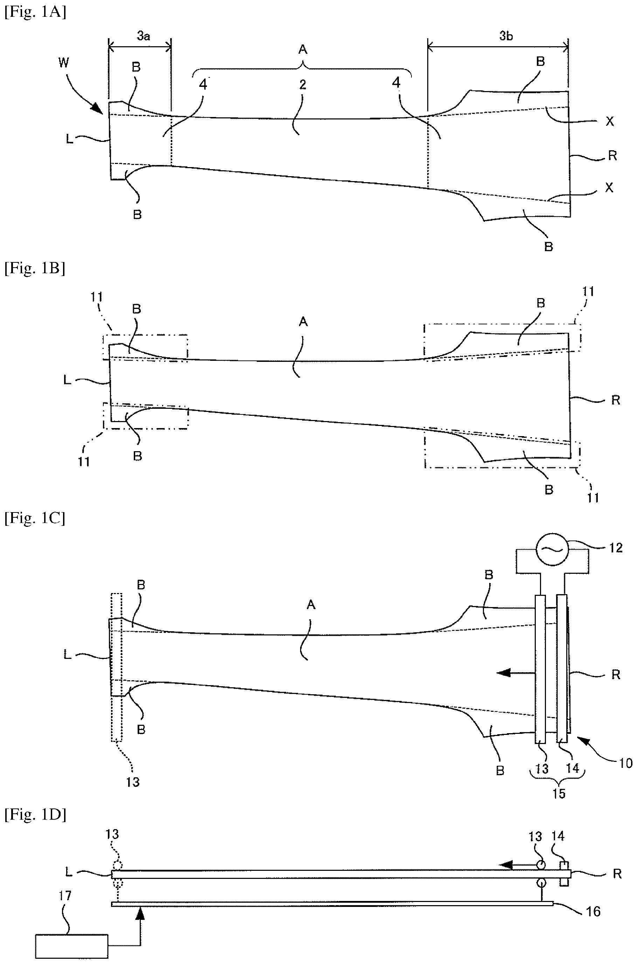

Figs. 1A to 1D illustrates a configuration of an example of a plate workpiece and a heating apparatus as well as a heating method, according to an embodiment of the present invention.

A workpiece W shown in Figs. 1A to 1D is a plate member having a constant thickness and is formed in a shape from which a desired product shape, specifically, a pillar of a car body, is obtained when formed.

The workpiece W has a main heating target region A in which the cross sectional area of the cross section perpendicular to the longitudinal direction (a first direction) increases or decreases monotonically along the longitudinal direction and sub heating target regions B provided adjacent to and integrally with a portion of the main heating target region A.

In the example shown in the figure, the workpiece W includes a narrow portion 2 that extends in the longitudinal direction of the workpiece W and whose dimension in the width direction perpendicular to the longitudinal direction gradually becomes narrow from one end portion of the longitudinal direction toward the other end portion, a wide portion 3a provided adjacent to and integrally with one end portion of the longitudinal direction of the narrow portion 2, and a wide portion 3b that is provided adjacent to and integrally with the other end portion of the longitudinal direction of the narrow portion 2 and that is yet wider than the wide portion 3a.

The main heating target region A includes the narrow portion 2 and extension portions 4 defined in the respective wide portions 3a, 3b by extension lines X extending in the longitudinal directions from the respective side edges of the longitudinally extending narrow portion 2, and is provided from one end to the other end of the workpiece W in the longitudinal direction. The sub heating target regions B the remainder regions of the wide portions 3a, 3b other than the extension portions 4 and are provided adjacent to width-directional both sides of one end portion R and the other end portion L of the longitudinal direction of the main heating target region A.

In the main heating target region A, the width gradually becomes narrow from one end portion R toward the other end portion L and hence the cross sectional area of the cross section perpendicular to the longitudinal direction decreases monotonically from the end portion R toward the end portion L. Here, the statement that the cross sectional area of the cross section perpendicular to the longitudinal direction increases or decreases monotonically along the longitudinal direction indicates that the cross sectional area increases or decreases in one direction without an inflection point. In a case that there is no rapid change in the cross sectional area that, when electric current is applied to the main heating target region A in the longitudinal direction, causes an excessive width-directional non-uniformity in the electric current density so that a low-temperature portion or a high-temperature portion causing a practical problem occurs partly, monotonic increase or decrease may be concluded.

A heating apparatus for heating the workpiece W includes: a first heating section 10 for heating the main heating target region A; and a second heating section 11 for heating the sub heating target regions B.

The first heating section 10 includes a power supply unit 12, a pair of electrodes 15 consisting of electrodes 13, 14, a moving mechanism 16, and a controller 17.

The power supply unit 12 supplies an electric current to the pair of electrodes 15. The electric current supplied from the power supply unit 12 to the pair of electrodes 15 is adjusted by the controller 17.

The electrodes 13, 14 of the pair of electrodes 15 have a length that extends across the workpiece W in the width direction of the workpiece W, and are arranged in parallel to each other across the workpiece W in the width direction in contact with the surface of the workpiece W.

In the example shown in Figs. 1A to 1D, the position of one electrode 14 is fixed. Then, the other electrode 13 is supported by the moving mechanism 16 and movable in the longitudinal direction of the workpiece W in a state of maintaining contact with the workpiece W. In the following description, the electrode 13 is referred to as a movable electrode and the electrode 14 is referred to as a fixed electrode. The movable electrode 13 may be configured as a roller capable of rolling.

Under the control of the controller 17, the moving mechanism 16 causes the movable electrode 13 to move in the longitudinal direction of the workpiece W at a constant speed.

As the second heating section 11, such a device is preferable that can heat the sub heating target regions B in a state that heating of the main heating target region A is suppressed. For example, a pair of electrodes for performing direct resistance heating on the sub heating target regions B, a coil for performing induction heating on the sub heating target regions B, a heating furnace partly containing the sub heating target regions B, a heater in contact with the sub heating target regions B, or the like may be employed. Here, in a case that a pair of electrodes is employed as the second heating section 11 and then direct resistance heating is performed on the sub heating target regions B, it is preferable that a high-frequency electric current is supplied. Then, the outer edge sides of the sub heating target regions B are strongly heated and hence the sub heating target regions B alone are easily heated.

A method of heating the workpiece W by using such a heating apparatus is as follows.

First, as shown in Fig. 1A, the main heating target region A and the sub heating target regions B are set up in the workpiece W. The main heating target region A and the sub heating target regions B may be set up suitably in accordance with the shape of the workpiece W and it is preferable that the shape is one permitting easy heating of the workpiece W to a target temperature range. Here, as described above, the narrow portion 2 and the extension portions 4 form the main heating target region A. Further, remainder regions of the wide portions 3a, 3b other than the extension portions 4 form the sub heating target regions B.

Then, as shown in Fig. 1B, the sub heating target regions B are arranged in the second heating section 11 and then the sub heating target regions B are heated. At that time, when the sub heating target regions B are heated in a state that heating of the main heating target region A is suppressed, the sub heating target regions B are heated to a high temperature and the main heating target region A is maintained at a low temperature. Thus, the resistance of the sub heating target regions B becomes higher than the resistance of the main heating target region A and hence an electric current path is formed that is to be used at the time of the next direct resistance heating of the main heating target region A.

At a stage that heating of the sub heating target regions B is completed, it is preferable that the sub heating target regions B are heated to a temperature higher than the target temperature range. By virtue of this, even when the temperature falls by heat radiation until the next direct resistance heating of the main heating target region A is started, the temperature of the sub heating target regions B can be maintained within the target temperature range.

After the heating of the sub heating target regions B, as shown in Figs. 1C and 1D, the pair of electrodes 15 is arranged on the workpiece W and then an electric current is supplied from the power supply unit 12 between the pair of electrodes 15 so that direct resistance heating is performed on the main heating target region A.

In the example shown in Figs. 1A to 1D, the movable electrode 13 and the fixed electrode 14 are arranged in a relatively wide end portion R of the main heating target region A. Then, in a state that the movable electrode 13 is moved at a constant speed from the end portion R side having a relatively large cross sectional area toward the end portion L side having a relatively small cross sectional area, an electric current is supplied between the pair of electrodes 15. In association with the movement of the movable electrode 13, the interval between the movable electrode 13 and the fixed electrode 14 is gradually expanded and electric current flows through the zone located between the movable electrode 13 and the fixed electrode 14 in the workpiece W. At that time, the sub heating target regions B are heated to a high temperature and hence, as described above, an electric current path corresponding to the main heating target region A is formed. Thus, a more amount of electric current flows through the main heating target region A so that the main heating target region A is heated.

Here, in direct resistance heating of the main heating target region A whose cross sectional area decreases monotonically along the moving direction of the movable electrode 13, when the electric current flowing between the pair of electrodes 15 is adjusted in accordance with the displacement of the movable electrode 13 moved at a constant speed, the main heating target region A can be heated to a target temperature range that can be regarded as a substantially uniform temperature.

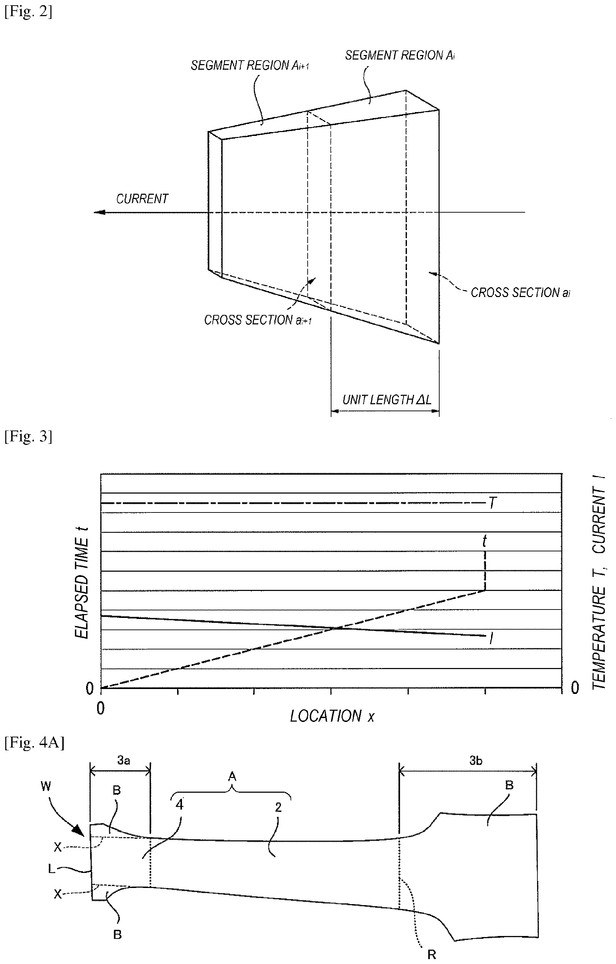

Fig. 2 shows a concept of electric current adjustment for uniformly heating the main heating target region A.

It is assumed that the entire length of the main heating target region A is divided into n pieces of segment regions A1 to An each having a length of ΔL. When the electric current at the time that the movable electrode passes ΔL of the i-th segment region is denoted by Ii and the current application time is denoted by ti (sec), the temperature rise θi of the i-th segment region is given by the following formula because heating occurs after the movable electrode 13 has passed this segment region.

[Math.1]

$$\theta_i = \frac{\rho_e}{C\rho}\frac{1}{a_i^{\,2}}\sum_i^n (I_i^{\,2}\times t_i)$$

Here, pe is the resistivity ($\Omega \cdot m$), $\rho$ is the density ($kg/m^3$), c is the specific heat ($J/kg \cdot °C$), ai is the cross sectional area ($m^2$) of the i-th segment region.

In order to make the temperatures θ1 to θn of the respective segment regions uniform, the electric current Ii and the current application time ti (the electrode moving speed Vi) in each segment region are determined such that the following formula is satisfied. Here, when the speed is constant, ti is constant, so that only the electric current Ii to be applied needs to be determined.

[Math.2]

$$\frac{1}{a_1^{\,2}}\sum_{i=1}^n (I_i^{\,2}\times t_i) = \frac{1}{a_2^{\,2}}\sum_{i=2}^n (I_i^{\,2}\times t_i) = \cdots = \frac{1}{a_n^{\,2}}\sum_{i=n}^n (I_i^{\,2}\times t_i)$$

In a case that the fixed electrode 14 is fixed in the end portion R of the main heating target region A and then the movable electrode 13 is moved from the end portion R of the main heating target region A toward the end portion L at a constant speed, the current applying zone between the movable electrode 13 and the fixed electrode 14 in the main heating target region A is gradually expanded from the end portion R side having a relatively large cross sectional area. Thus, the segment regions A1, A2, ..., An have different current application times from each other and then a segment region located on the more end-part R side have a longer current application time. Further, when the same electric current is supplied for the same time to a segment region on the end portion R side and to a segment region on the end portion L side, a smaller amount of heat is generated in the segment region located on the end portion R side having a relatively large cross sectional area.

Thus, in relation with the current application time in each segment region, when the electric current flowing between the pair of electrodes 15 is adjusted based on the change in the cross sectional area of the main heating target region A, the amount of heat generated in each segment region can approximately be the same and hence the main heating target region A can be heated to a temperature range that can be regarded as a substantially uniform temperature.

Fig. 3 shows an example of a relationship between the elapsed time from heating start and the location of the movable electrode 13, a relationship between the movement of the movable electrode 13 and the electric current to be supplied between the pair of electrodes 15, and the temperature distribution of the main heating target region A at the time of heating completion, in the heating method of Figs. 1A to 1D. Here, in Fig. 3, the initial position (the end portion R of the main heating target region A) of the movable electrode 13 at the time of heating start is adopted as the origin and then the position of the movable electrode 13 is measured as the distance from the origin.

In the example shown in Fig. 3, adjustment is performed such that, in the course that the movable electrode 13 is moved from the end portion R of the main heating target region A toward the end portion L at a constant speed, the electric current flowing between the pair of electrodes 15 gradually becomes small. In order to heat the end portion L of the main heating target region A to a target temperature range, the movable electrode 13 is held at the end portion L for a fixed time after the movable electrode 13 has arrived at the end portion L. During that time, an electric current equal to that at the time point of arrival of the movable electrode 13 at the end portion L is supplied between the pair of electrodes 15. By virtue of this electric current adjustment, the main heating target region A is heated to be within a target temperature range that can be regarded as a substantially uniform temperature.

Then, when the heating temperature of the sub heating target regions B and the heating timing of the main heating target region A are adjusted, the main heating target region A and the sub heating target regions B can be heated to be within a target temperature range that can be regarded as a substantially uniform temperature. Here, depending on the time between the heating of the sub heating target regions B and the direct resistance heating of the main heating target region A or on the level of heat transmission, in some cases, the temperature of the sub heating target regions B falls by heat radiation. However, in a case that heating is performed to a temperature higher than the target temperature range at the time of heating of the sub heating target regions B, the temperature of the main heating target region A and the temperature of the sub heating target regions B posterior to the heat radiation can be made substantially identical to each other and hence the temperatures of the main heating target region A and the sub heating target regions B can be made within the target temperature range.

According to the heating method for the workpiece W described above, the workpiece W is sequentially heated by dividing the workpiece W into the main heating target region A and the sub heating target regions B. Thus, the main heating target region A and the sub heating target regions B in simple shapes can be heated. Accordingly, a broad region of the workpiece W as a combination of the main heating target region A and the sub heating target regions B can easily be heated to the target temperature range. Further, direct resistance heating can be performed on the main heating target region A and then the sub heating target regions B can be heated by a method suitable for the sub heating target regions B. Thus, a broad region of the workpiece W as a combination of the main heating target region A and the sub heating target regions B can be heated by a simple configuration.

Further, the main heating target region A has a shape in which the cross sectional area of the cross section perpendicular to the longitudinal direction varies monotonically along the longitudinal direction. This avoids a situation that, when direct resistance heating of the main heating target region A is performed in the longitudinal direction, a portion where the distribution of the electric current density in the width direction is excessively non-uniform occurs in the main heating target region A. Further, when in a state that one movable electrode 13 selected from the pair of electrodes 15 for performing direct resistance heating on the main heating target region A in the longitudinal direction is moved in the longitudinal direction and at a constant speed, the electric current flowing between the pair of electrodes 15 is adjusted in accordance with the displacement of the movable electrode 13, the main heating target region A can easily be heated to a temperature within the target temperature range.

Further, the sub heating target regions B are provided adjacent to and integrally with a portion of the main heating target region A in the width direction. Thus, in a case that the sub heating target regions B are maintained in an appropriate heating state during the direct resistance heating of the main heating target region A in the longitudinal direction, an electric current path corresponding to the main heating target region A can be formed. This reduces the influence of the sub heating target regions B to the direct resistance heating of the main heating target region A. Thus, a broad region of the workpiece W as a combination of the main heating target region A and the sub heating target regions B can easily be heated to the target temperature range.

Figs. 4A to 4D illustrate a modified example of the heating method of Figs. 1A to 1D.

In the example shown in Figs. 4A to 4D, setting of the main heating target region A and the sub heating target regions B in the workpiece W is different from the example shown in Figs. 1A to 1D.

The main heating target region A includes a narrow portion 2 and an extension portion 4 defined in a wide portion 3a by extending both sides of the narrow portion 2 in the respective longitudinal directions. The sub heating target regions B include the remainder regions of the wide portion 3a other than the extension portion 4 and the other wide portion 3b. In the main heating target region A, the width gradually becomes narrow from one end portion R toward the other end portion L and hence the cross sectional area of the cross section perpendicular to the longitudinal direction decreases monotonically from the end portion R toward the end portion L.

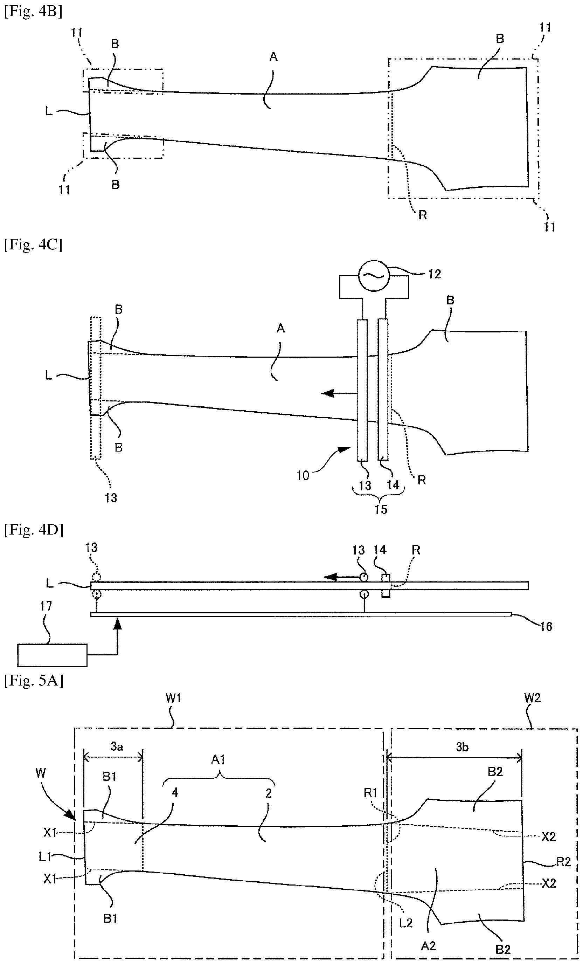

When the workpiece W is to be heated, first, as shown in Fig. 4A, the main heating target region A and the sub heating target regions B are set up in the workpiece W as described above. Then, as shown in Fig. 4B, the sub heating target regions B are arranged in the second heating section 11 and then the sub heating target regions B are heated.

After the heating of the sub heating target regions B, as shown in Figs. 4C and 4D, the movable electrode 13 and the fixed electrode 14 are arranged in a relatively wide end portion R of the main heating target region A. Then, in a state that the movable electrode 13 is moved at a constant speed from the end portion R side having a relatively large cross sectional area toward the end portion L side having a relatively small cross sectional area, an electric current is supplied between the pair of electrodes 15. In association with the movement of the movable electrode 13, the interval between the movable electrode 13 and the fixed electrode 14 is gradually expanded and electric current flows through the zone located between the movable electrode 13 and the fixed electrode 14 in the workpiece W.

Also in this example, in the main heating target region A, the cross sectional area decreases monotonically along the moving direction of the movable electrode 13. Thus, when the electric current flowing between the pair of electrodes 15 is adjusted in accordance with the displacement of the movable electrode 13, the main heating target region A can be heated to a target temperature range that can be regarded as a substantially uniform temperature. Then, when the heating temperature of the sub heating target regions B and the heating timing of the main heating target region A are adjusted, the main heating target region A and the sub heating target regions B can be heated to the target temperature range that can be regarded as a substantially uniform temperature.

Figs. 5A to 5D illustrate a configuration of another example of a plate workpiece and a heating apparatus as well as a heating method, according to another embodiment of the present invention.

In the example shown in Figs. 5A to 5D, the workpiece W is divided into a first portion W1 including a wide portion 3a and a narrow portion 2 and a second portion W2 including the other wide portion 3b, and the first portion W1 and the second portion W2 are heated to different target temperature ranges respectively so that the first portion W1 and the second portion W2 have different properties.

The first portion W1 has a first main heating target region A1 in which the cross sectional area of the cross section perpendicular to the longitudinal direction (a first direction) increases or decreases monotonically along the longitudinal direction and sub heating target regions B1 provided adjacent to and integrally with a part of the first main heating target region A1.

The first main heating target region A1 includes a narrow portion 2 and an extension portion 4 defined in the wide portion 3a extension lines X1 extending from both sides of the narrow portion 2 in the respective longitudinal directions. The width gradually becomes narrow from one end portion R1 toward the other end portion L1 and hence the cross sectional area of the cross section perpendicular to the longitudinal direction decreases monotonically from the end portion R1 toward the end portion L1. The sub heating target regions B1 are the remainder regions of the wide portion 3a other than the extension portion 4 and are provided adjacent to width-directional both sides of one end portion L1 of the longitudinal direction of the first main heating target region A1.

The second portion W2 also has a second main heating target region A2 in which the cross sectional area of the cross section perpendicular to the longitudinal direction (a first direction) increases or decreases monotonically along the longitudinal direction and sub heating target regions B2 provided adjacent to and integrally with a part of the second main heating target region A2.

The second main heating target region A2 is defined in the wide portion 3b by extension lines X2 extending from both sides of the narrow portion 2 in the respective longitudinal directions. The width gradually becomes narrow from one end portion L2 toward the other end portion R2 and hence the cross sectional area of the cross section perpendicular to the longitudinal direction decreases monotonically from the end portion L2 toward the end portion R2. The sub heating target regions B2 are the remainder regions of the wide portion 3b other than the second main heating target region A2 and are provided adjacent to width-directional both sides of the second main heating target region A2.

A heating apparatus for heating the workpiece W is similar to that of the example shown in Figs. 1A to 1D except for the configuration of the first heating section 10. The first heating section 10 includes a power supply unit 12, a pair of electrodes 15 consisting of electrodes 13, 14, moving mechanisms 16a, 16b, and a controller 17.

The power supply unit 12 supplies an electric current to the pair of electrodes 15. The electric current supplied from the power supply unit 12 to the pair of electrodes 15 is adjusted by the controller 17. The electrodes 13, 14 of the pair of electrodes 15 have a length that extends across the workpiece W in the width direction of the workpiece W, and are arranged to extend across the workpiece W in the width direction in parallel to each other to contact with the surface of the workpiece W. Then, in the present example, the electrode 13 is supported by the moving mechanism 16a in a manner of being movable in the longitudinal direction of the workpiece W with maintaining contact with the workpiece W. Further, the electrode 14 also is supported by the moving mechanism 16b in a manner of being movable in the longitudinal direction of the workpiece W with maintaining contact with the workpiece W.

A method of heating the workpiece W by using such a heating apparatus is as follows.

First, as shown in Fig. 5A, the first main heating target region A1, the second main heating target region A2, and the sub heating target regions B1, B2 are set up in the workpiece W.

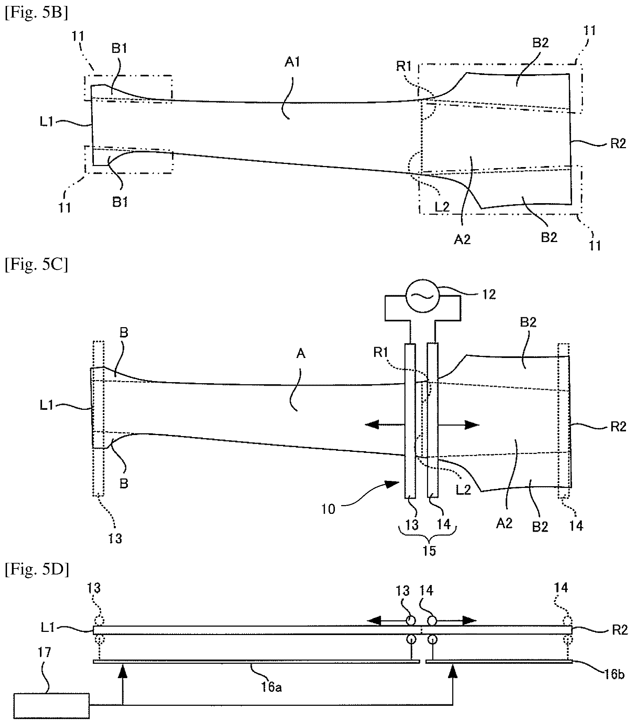

Then, as shown in Fig. 5B, the sub heating target regions B1, B2 are arranged in the second heating section 11 and then the sub heating target regions B1, B2 are heated. At that time, it is preferable that the sub heating target regions B1 are heated in a state that heating of the first main heating target region A1 is suppressed and, further, that the sub heating target regions B2 are heated in a state that heating of the second main heating target region A2 is suppressed. The resistance of the sub heating target regions B1 becomes higher than the resistance of the adjacent first main heating target region A1. Further, the resistance of the sub heating target regions B2 becomes higher than the resistance of the adjacent second main heating target region A2. Thus, an electric current path can be formed that is to be used at the time of the next direct resistance heating of the first main heating target region A1 and the second main heating target region A2.

At a stage that heating of the sub heating target regions B1, B2 is completed, it is preferable that the sub heating target regions B1 are heated to a temperature higher than a target temperature range of the first portion W1 and, further, the sub heating target regions B2 are heated to a temperature higher than a target temperature range of the second portion W2. By virtue of this, even when the temperature falls by heat radiation until the next direct resistance heating of the first main heating target region A1 and the second main heating target region A2 is started, the temperatures of the sub heating target regions B1, B2 can be made to be within the respective target temperature ranges.

After the heating of the sub heating target regions B1, B2, as shown in Figs. 5C and 5D, the pair of electrodes 15 is arranged on the workpiece W and then an electric current is supplied from the power supply unit 12 between the pair of electrodes 15 so that direct resistance heating is performed on the first main heating target region A1 and the second main heating target region A2.

One movable electrode 13 is arranged in a relatively wide end portion R1 located in the vicinity of the boundary of the first main heating target region A1 with the second main heating target region A2 and then is moved at a constant speed from the end portion R1 side having a relatively large cross sectional area toward the end portion L1 side having a relatively small cross sectional area. The other movable electrode 14 is arranged in a relatively wide end portion L2 located in the vicinity of the boundary of the second main heating target region A2 with the first main heating target region A1 and then is moved at a constant speed from the end portion L2 side having a relatively large cross sectional area toward the end portion R2 side having a relatively small cross sectional area. Then, in a state that the movable electrodes 13, 14 are individually moved at a constant speed, an electric current is supplied between the pair of electrodes 15. In association with the movement of the movable electrodes 13, 14, the interval between the movable electrodes 13, 14 is gradually expanded and electric current flows through the zone located between the movable electrodes 13, 14 in the workpiece W. At that time, the sub heating target regions B1, B2 are heated to a high temperature and hence, as described above, an electric current path corresponds to each of the first main heating target region A1 and the second main heating target region A2 is formed. Thus, a more amount of electric current flows through the first main heating target region A1 and the second main heating target region A2 so that the first main heating target region A1 and the second main heating target region A2 are heated.

Also in this example, in the first main heating target region A1, the cross sectional area decreases monotonically along the moving direction of the movable electrode 13. Thus, when the electric current flowing between the pair of electrodes 15 is adjusted in accordance with the displacement of the movable electrode 13, the first main heating target region A1 can be heated to a target temperature range that can be regarded as a substantially uniform temperature. Also in the second main heating target region A2, the cross sectional area decreases monotonically along the moving direction of the movable electrode 14. Thus, when the electric current flowing between the pair of electrodes 15 is adjusted in accordance with the displacement of the movable electrode 14, the second main heating target region A2 can be heated to a target temperature range that can be regarded as a substantially uniform temperature. Further, when the individual heating temperatures of the sub heating target regions B1, B2 and the individual heating timings of the first main heating target region A1 and the second main heating target region A2 are adjusted, the first main heating target region A1 and the sub heating target regions B1 can be heated to a target temperature range that can be regarded as a substantially uniform temperature in the first portion W1. Further, also in the second main heating target region A2 and the sub heating target regions B2 can be heated to a target temperature range that can be regarded as a substantially uniform temperature in the second portion W2. In addition, the first portion W1 and the second portion W2 can be heated to different temperature ranges from each other.

When the workpiece W is heated as described above, operation effects similar to those in the heating method shown in Figs. 1A to 1D can be obtained. In particular, in the present example, since the present invention has been applied to each of the first portion W1 and the second portion W2, the first portion W1 and the second portion W2 can be heated to different temperature ranges from each other.

Here, in the examples described above, the entire workpiece W had a uniform thickness. However, a tailored blank whose thickness varies in the longitudinal direction may be employed. Then, for example, a plate workpiece in which the wide portion 3b and the remaining part have different thicknesses from each other may be heated similarly. In this case, the wide portion 3b and the remaining part can be heated to the same temperature range.

For example, the heating method described above may be employed in quenching treatment in which a material is rapidly cooled down after heating. Further, the heating method may be employed in a method for fabricating a press-molded article in which pressing is performed by a press die in a high temperature condition after heating so that hot pressing is performed.

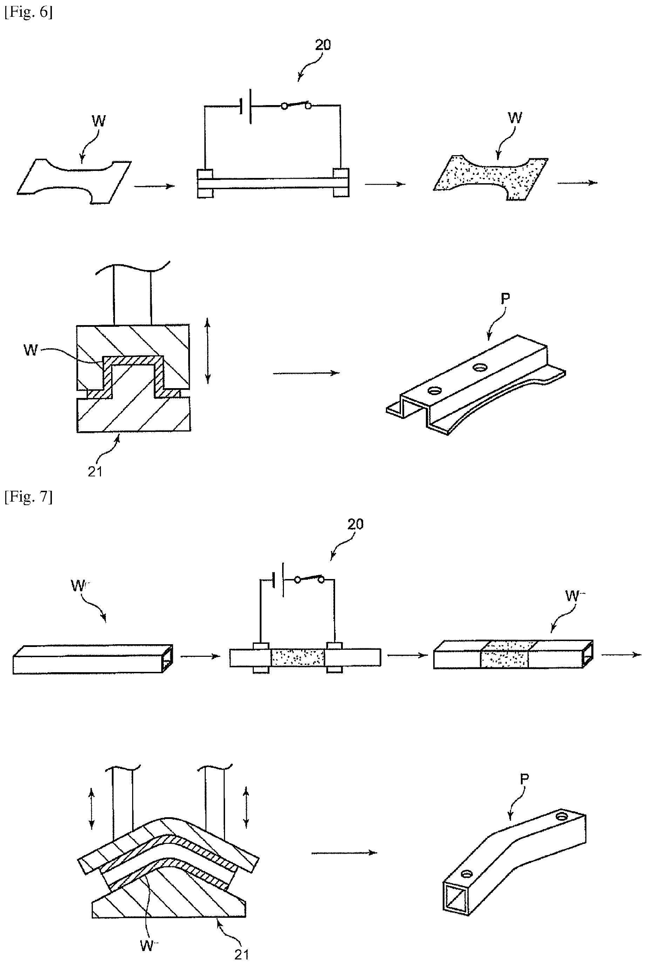

Fig. 6 shows an example of a method for fabricating a press-molded article, according to an embodiment of the present invention.

As shown in Fig. 6, first, a workpiece W formed in a predetermined shape is heated by the heating method shown in Figs. 1A to 1D or Figs. 5A to 5D by using a heating apparatus 20. After that, the workpiece W in a high temperature condition is immediately pressed by a press die 21 of a press device so as to be formed into a predetermined shape.

According to this fabrication method, the heating apparatus 20 having a simple configuration is sufficient as described above. Thus, the heating apparatus 20 may be arranged close to the press device or, alternatively, may be integrally incorporated into the press device. Accordingly, press molding of the workpiece W after the heating can be performed in a short time and hence a temperature decrease in the heated workpiece W can be suppressed so that an energy loss can be reduced. Further, oxidization of the surface of the plate workpiece can be avoided so that a high-quality press-molded article can be fabricated.

Further, a broad region of the workpiece W as a combination of the main heating target region and from the sub heating target regions provided adjacent to and integrally with the main heating target region can be heated to a temperature within a target temperature range. Thus, at the time that the workpiece W is pressed by the press die 21, a temperature variation in the region to be deformed can be suppressed so that a variation in the strength of the workpiece W can be reduced. As a result, molding can easily be performed and hence a variation in the quality of molded article P can be reduced.

For example, the fabrication method for a press-molded article described above may be applied to a workpiece W formed in a hollow shape as shown in Fig. 7. In this case, the pair of electrodes may be brought into contact with the hollow workpiece W formed in a predetermined shape and then, with electric current being applied , the electrodes may be moved in correspondence to a change in the longitudinal direction of the cross sectional area of each wall so that direct resistance heating may be performed. After that, the workpiece W in a high temperature condition may immediately be pressed by the press die 21 of the press device so that a molded article P having a predetermined shape may be formed. Also in this fabrication method for a press-molded article, operation effects similar to the above-mentioned one can be obtained.

Various changes may be made in the examples described above within the scope of the present claims. For example, the present invention may be applied to a plate workpiece in which individual portions have different thicknesses from each other. Further, the description has been given for an example that, at the time of direct resistance heating of the main heating target region A, one electrode selected from the electrodes 13, 14 is moved. Instead, both of the electrodes 13, 14 may be moved depending on the shape of the main heating target region A.

**Claims**

1. A method for heating a plate workpiece (W) having a main heating target region (A) in which a cross sectional area of a cross section perpendicular to a first direction varies monotonically along the first direction and a sub heating target region (B) provided adjacent to and integrally with a portion of the main heating target region (A), the method comprising:

   heating the sub heating target region (B); and
   heating the main heating target region (A) by a direct resistance heating,
   **characterized in that** the heating of the main heating target region (A) comprises moving at least one (13) of a pair of electrodes (15) contacting the plate workpiece (W) in the first direction and at a constant speed on the main heating target region (A), the at least one (13) of the pair of electrodes (15) being arranged to extend across the main heating target region (A) in a second direction intersecting the first direction, and adjusting electric current flowing between the pair of electrodes (15) in accordance with a displacement of the at least one (13) of the pair of electrodes (15) that is being moved, and
   **in that** the main heating target region (A) is heated after the heating of the sub heating target region (B) to heat the main heating target region (A) and the sub heating target region (B) to be in a target temperature range.

2. The heating method according to claim 1, wherein the electric current flowing between the pair of electrodes (15) is adjusted based on a change in the cross sectional area of the main heating target region (A) in the first direction.

3. The heating method according to claim 1 or 2, wherein the one of the pair of electrodes (15) arranged to extend across the main heating target region (A) in the second direction intersecting the first direction is moved in the first direction and at the constant speed on the main heating target region (A) such that a current applying zone in the main heating target region (A) is gradually expanded from a side of the main heating target region (A) at which the cross sectional area is larger than the other side of the main heating target region (A).

4. The heating method according to any one of claims 1 to 3, wherein the sub heating target region (B) is provided adjacent to and integrally with the portion of the main heating target region (A) in the second direction.

5. The heating method according to any one of claims 1 to 4, wherein the main heating target region (A) is heated by the direct resistance heating after the heating of the sub heating target region (B) to a higher temperature than the target temperature range.

6. The heating method according to any one of claims 1 to 5, wherein the sub heating target region (B) is heated by one of direct resistance heating, induction heating, furnace heating, and heater heating.

7. A heating apparatus (20) configured to heat a plate workpiece (W) having a main heating target region (A) in which a cross sectional area of a cross section perpendicular to a first direction varies monotonically along the first direction and a sub heating target region (B) provided adjacent to and integrally with a portion of the main heating target region (A), the heating apparatus (20) comprising:

a first heating section (10) configured to heat the main heating target region (A); and
a second heating section (11) configured to heat the sub heating target region (B),
wherein the first heating section (10) comprises:

a pair of electrodes (15) arranged to contact the plate workpiece (W), at least one (13) of the electrodes (15) arranged to extend across the main heating target region (A) in a second direction intersecting the first direction;
**characterized in that** the first heating section (10) further comprises a moving mechanism (16) configured to move the at least one (13) of the electrodes (15) in the first direction and at a constant speed on the main heating target region (A); and
a controller (17) configured to adjust electric current flowing between the pair of electrodes (15) in accordance with a displacement of the at least one (13) of the electrodes (15) that is being moved, and
**in that** the second heating section (11) is configured to heat the sub heating target region (B) independently of the first heating section (10).

8. A method for fabricating a press-molded article (P), the method comprising:

heating a plate workpiece (W) by the method according to any one of claims 1 to 6; and
pressing the plate workpiece (W) by a press die to perform hot pressing.

**Patentansprüche**

1. Verfahren zum Erwärmen eines Plattenwerkstücks (W), das einen Haupterwärmungszielbereich (A), in dem eine Querschnittsfläche eines Querschnitts senkrecht zu einer ersten Richtung monoton entlang der ersten Richtung variiert, und einen Untererwärmungszielbereich (B) hat, der angrenzend an und integral mit einem Abschnitt des Haupterwärmungszielbereichs (A) vorgesehen ist, wobei das Verfahren umfasst:

Erwärmen des Untererwärmungszielbereichs (B); und
Erwärmen des Haupterwärmungszielbereichs (A) durch eine Direktwiderstandserwärmung,
**dadurch gekennzeichnet, dass** das Erwärmen des Haupterwärmungszielbereichs (A) umfasst, mindestens eine (13) eines Paars von Elektroden (15), die das Plattenwerkstück (W) berühren, in der ersten Richtung und mit einer konstanten Geschwindigkeit am Haupterwärmungszielbereich (A) zu bewegen, wobei die mindestens eine (13) des Paars von Elektroden (15) sich über den Haupterwärmungszielbereich (A) in einer die erste Richtung schneidenden zweiten Richtung erstreckend angeordnet ist, und einen elektrischer Strom, der zwischen dem Paar von Elektroden (15) fließt, in Übereinstimmung mit einer Verlagerung der mindestens einen (13) des Paars von Elektroden (15) einzustellen, die bewegt wird, und
dass der Haupterwärmungszielbereich (A) nach dem Erwärmen des Untererwärmungszielbereichs (B) erwärmt wird, um den Haupterwärmungszielbereich (A) und den Untererwärmungszielbereich (B) so zu erwärmen, dass sie sich in einem Zieltemperaturbereich befinden.

2. Erwärmungsverfahren nach Anspruch 1, wobei der elektrische Strom, der zwischen dem Paar von Elektroden (15) fließt, auf Grundlage einer Veränderung der Querschnittsfläche des Haupterwärmungszielbereichs (A) in der ersten Richtung eingestellt wird.

3. Erwärmungsverfahren nach Anspruch 1 oder 2, wobei die eine des Paars von Elektroden (15), die sich über den

Haupterwärmungszielbereich (A) in der die erste Richtung schneidenden zweiten Richtung erstreckend angeordnet ist, in der ersten Richtung und mit der konstanten Geschwindigkeit am Haupterwärmungszielbereich (A) so bewegt wird, dass eine Strombeaufschlagungszone im Haupterwärmungszielbereich (A) von einer Seite des Haupterwärmungszielbereichs (A) aus, in der die Querschnittsfläche größer ist als auf der anderen Seite des Haupterwärmungszielbereichs (A), allmählich ausgeweitet wird.

4. Erwärmungsverfahren nach einem der Ansprüche 1 bis 3, wobei der Untererwärmungszielbereich (B) angrenzend an und integral mit dem Abschnitt des Haupterwärmungszielbereichs (A) in der zweiten Richtung vorgesehen ist.

5. Erwärmungsverfahren nach einem der Ansprüche 1 bis 4, wobei der Haupterwärmungszielbereich (A) durch die Direktwiderstandserwärmung nach dem Erwärmen des Untererwärmungszielbereichs (B) auf eine höhere Temperatur als den Zieltemperaturbereich erwärmt wird.

6. Erwärmungsverfahren nach einem der Ansprüche 1 bis 5, wobei der Untererwärmungszielbereich (B) durch Direktwiderstandserwärmung, Induktionserwärmung, Ofenerwärmung und/oder Heizkörpererwärmung erwärmt wird.

7. Erwärmungsvorrichtung (20), die dazu ausgelegt ist, ein Plattenwerkstück (W) zu erwärmen, das einen Haupterwärmungszielbereich (A), in dem eine Querschnittsfläche eines Querschnitts senkrecht zu einer ersten Richtung monoton entlang der ersten Richtung variiert, und einen Untererwärmungszielbereich (B) hat, der angrenzend an und integral mit einem Abschnitt des Haupterwärmungszielbereichs (A) vorgesehen ist, wobei die Erwärmungsvorrichtung (20) umfasst:

   einen ersten Erwärmungsabschnitt (10), der dazu ausgelegt ist, den Haupterwärmungszielbereich (A) zu erwärmen; und
   einen zweiten Erwärmungsabschnitt (11), der dazu ausgelegt ist, den Untererwärmungszielbereich (B) zu erwärmen,
   wobei der erste Erwärmungsabschnitt (10) umfasst:

   ein Paar von Elektroden (15), die das Plattenwerkstück (W) berührend angeordnet sind, wobei mindestens eine (13) der Elektroden (15) sich über den Haupterwärmungszielbereich (A) in einer die erste Richtung schneidenden zweiten Richtung erstreckend angeordnet ist;
   **dadurch gekennzeichnet, dass** der erste Erwärmungsabschnitt (10) darüber hinaus einen Bewegungsmechanismus (16) umfasst, der dazu ausgelegt ist, die mindestens eine (13) der Elektroden (15) in der ersten Richtung und mit einer konstanten Geschwindigkeit am Haupterwärmungszielbereich (A) zu bewegen; und
   eine Steuereinheit (17), die dazu ausgelegt ist, einen elektrischen Strom, der zwischen dem Paar von Elektroden (15) fließt, in Übereinstimmung mit einer Verlagerung der mindestens einen (13) der Elektroden (15) einzustellen, die bewegt wird, und
   dass der zweite Erwärmungsabschnitt (11) dazu ausgelegt ist, den Untererwärmungszielbereich (B) unabhängig vom ersten Erwärmungsabschnitt (10) zu erwärmen.

8. Verfahren zum Herstellen eines pressgeformten Artikels (P), wobei das Verfahren umfasst:

   Erwärmen eines Plattenwerkstücks (W) durch das Verfahren nach einem der Ansprüche 1 bis 6; und
   Pressen des Plattenwerkstücks (W) mittels einer Pressform, um einen Heißpressvorgang durchzuführen.

**Revendications**

1. Procédé de chauffage d'une pièce de type plaque (W) ayant une région principale cible de chauffage (A) dans laquelle une surface de section transversale d'une section transversale perpendiculaire à une première direction varie de façon monotone le long de la première direction et une région secondaire cible de chauffage (B) disposée de façon adjacente à une partie de la région principale cible de chauffage (A) et d'un seul tenant avec celle-ci, le procédé comprenant :

   le chauffage de la région secondaire cible de chauffage (B) ; et
   le chauffage de la région principale cible de chauffage (A) par un chauffage direct par résistance,
   **caractérisé en ce que** le chauffage de la région principale cible de chauffage (A) comprend le déplacement d'au moins une (13) d'une paire d'électrodes (15) en contact avec la pièce de type plaque (W) dans la première direction et à une vitesse constante sur la région principale de chauffage cible (A), d'au moins une (13) de la paire d'électrodes (15) étant disposée de façon à s'étendre sur la région principale cible de chauffage (A) dans une seconde direction croisant la première direction, et le réglage du courant électrique circulant entre la paire d'électrodes (15) en fonction d'un déplacement de la au moins une (13) de la paire d'électrodes (15) qui est déplacée, et

**en ce que** la région principale cible de chauffage (A) est chauffée après le chauffage de la région secondaire de chauffage cible (B) pour chauffer la région principale cible de chauffage (A) et la région secondaire cible de chauffage (B) pour qu'elles soient dans une plage de températures cible.

2. Procédé de chauffage selon la revendication 1, dans lequel le courant électrique circulant entre la paire d'électrodes (15) est réglé sur la base d'un changement dans la surface de section transversale de la région principale cible de chauffage (A) dans la première direction.

3. Procédé de chauffage selon la revendication 1 ou 2, dans lequel une de la paire d'électrodes (15) disposée pour s'étendre sur la région principale cible de chauffage (A) dans la seconde direction croisant la première direction est déplacée dans la première direction et à la vitesse constante sur la région principale cible de chauffage (A) de telle sorte qu'une zone d'application de courant dans la région principale cible de chauffage (A) est progressivement élargie à partir d'un côté de la région principale cible de chauffage (A) au niveau duquel la surface de section transversale est plus grande que de l'autre côté de la région principale cible de chauffage (A).

4. Procédé de chauffage selon l'une quelconque des revendications 1 à 3, dans lequel la région secondaire cible de chauffage (B) est disposée de façon adjacente à la partie de la région principale cible de chauffage (A) dans la seconde direction et d'un seul tenant avec celle-ci.

5. Procédé de chauffage selon l'une quelconque des revendications 1 à 4, dans lequel la région principale cible de chauffage (A) est chauffée par le chauffage direct par résistance après le chauffage de la région secondaire cible de chauffage (B) à une température supérieure à la plage de températures cible.

6. Procédé de chauffage selon l'une quelconque des revendications 1 à 5, dans lequel la région secondaire cible de chauffage (B) est chauffée par l'un parmi un chauffage direct par résistance, un chauffage par induction, un chauffage au four et un chauffage par élément chauffant.

7. Appareil de chauffage (20) configuré pour chauffer une pièce de type plaque (W) ayant une région principale cible de chauffage (A) dans laquelle une surface de section transversale d'une section transversale perpendiculaire à une première direction varie de façon monotone le long de la première direction et une région secondaire cible de chauffage (B) disposée de façon adjacente à une partie de la région principale cible de chauffage (A) et d'un seul tenant avec celle-ci, l'appareil de chauffage (20) comprenant :

une première section de chauffage (10) configurée pour chauffer la région principale cible de chauffage (A) ; et une seconde section de chauffage (11) configurée pour chauffer la région secondaire cible de chauffage (B), dans lequel la première section de chauffage (10) comprend :

une paire d'électrodes (15) agencées pour être en contact avec la pièce de type plaque (W), au moins l'une (13) des électrodes (15) étant disposée pour s'étendre sur la région principale cible de chauffage (A) dans une seconde direction croisant la première direction ;
**caractérisé en ce que** la première section de chauffage (10) comprend en outre un mécanisme de déplacement (16) configuré pour déplacer au moins une (13) des électrodes (15) dans la première direction et à une vitesse constante sur la région principale cible de chauffage (A) ; et
un régulateur (17) configuré pour régler le courant électrique circulant entre la paire d'électrodes (15) en fonction d'un déplacement de la au moins une (13) des électrodes (15) qui est déplacée, et
**en ce que** la seconde section de chauffage (11) est configurée pour chauffer la région secondaire cible de chauffage (B) indépendamment de la première section de chauffage (10).

8. Procédé de fabrication d'un article moulé par compression (P), le procédé comprenant :

le chauffage d'une pièce de type plaque (W) par le procédé selon l'une quelconque des revendications 1 à 6 ; et
la compression de la pièce de type plaque (W) par une matrice de presse pour réaliser une compression à chaud.

[Fig. 1A]

[Fig. 1B]

[Fig. 1C]

[Fig. 1D]

[Fig. 2]

[Fig. 3]

[Fig. 4A]

[Fig. 4B]

[Fig. 4C]

[Fig. 4D]

[Fig. 5A]

[Fig. 5B]

[Fig. 5C]

[Fig. 5D]

[Fig. 6]

[Fig. 7]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011189402 A
- JP 4563469 B
- WO 2014025054 A1